# EUROPEAN PATENT APPLICATION

(11) **EP 2 079 044 A1**
(43) Date of publication of application: **15.07.2009**
(21) Application number: 08300031.5
(22) Date of filing: 14.01.2008
(51) Int. Cl.: G06Q 10/00, G06Q 30/00

(54) **Multi-travel aggregator**

(71) Applicant: Amadeus S.A.S., 06410 Biot (FR)
(72) Inventor: Zuida, Valérie, 06600, ANTIBES (FR); Forde, Fintan, 06330, ROQUEFORT LES PINS (FR); Labrit, Yvan, 83480, PUGET SUR ARGENS (FR); Warbington, William, 06400, CANNES (FR)
(74) Representative: Decobert, Jean-Pascal

(57) **Abstract**

A method and a system for aggregating travel solutions from a plurality of travel sources are described which first comprises setting up: markets, each made of a pair of geographic criteria with an optional directional indicator; sources of travel solutions per market; baskets of compatible travel sources including provider types and travel product characteristics; and basket rules for grouping baskets per market and product characteristics. Then, upon receiving a travel request including an itinerary and preferences, the basket rule best fitting the travel request is selected; the appropriate baskets for the selected basket rule are identified. After which, for each basket, the sources of travel solutions are determined and travel requests forwarded to each determined source. Responses are aggregated and displayed in a common format; thereby, allowing a transparent comparison of the travel solutions from the plurality of travel providers.

## Description

### FIELD OF THE INVENTION

The present invention relates generally to travel planning systems, and more particularly, to a system and method that dynamically aggregate and display travel solutions from a variety of travel sources, possibly including different transportation means, in a coherent and consistent way allowing a transparent comparison of the aggregated travel solutions.

### BACKGROUND OF THE INVENTION

Travel planning and reservation systems have long been in use. First, essentially by agents of traditional travel agencies generally affiliated with a global distribution system (GDS) that remotely provide them all the necessary support from its large networking, storing and computing resources.

Based on a single request from a traveler, existing systems may enable to provide the traveler with various transportation solutions. However, these solutions turn out to be poorly efficient.

Indeed the results are often not satisfactory because of the limited number of travel providers that are addressed. Thus for many journeys no relevant comparison or even no solutions are provided to the traveler.

Besides, searching solutions at each provider affiliated to the system is resource and time consuming.

Based on the above limitations of existing systems there is thus a need for an improved travel aggregator system capable of automatically collecting and analyzing travel solutions from a potentially unrestricted number of travel sources.

It is also an object of the invention to consider all sorts of the available transportation means that can best fulfill traveler requests whatever the travel is global or local and whatever the departure and arrival locations.

It is a further object of the invention to display the retrieved travel solutions in a way that allows a transparent comparison irrespective from which travel sources and from which travel providers they have been selected.

It is another objective of the invention to allow displaying and booking of solutions involving various travel providers.

Another objective aims at providing a comparison of the available travel solutions according to quality of offer (price, flexibility, class of services).

It is another goal of the invention to handle fragmentation of the sourcing of a travel on a travel market basis.

Further objects, features and advantages of the present invention will become apparent to the ones skilled in the art upon examination of the following description in reference to the accompanying drawings. It is intended that any additional advantages be incorporated herein.

### SUMMARY OF THE INVENTION

The invention describes a method and a system for aggregating travel solutions from a plurality of travel sources which first comprises setting up:
markets, each made of a pair of geographic criteria with an optional directional indicator; sources of travel solutions per market; baskets of compatible travel sources including provider types and travel product characteristics; and basket rules for grouping baskets per market and product characteristics. Then, upon receiving a travel request including an itinerary and preferences, the basket rule best fitting the travel request is selected; the appropriate baskets for the selected basket rule are identified. After which, for each basket, the sources of travel solutions are selected and travel requests forwarded to each determined source. Responses are aggregated and displayed in a common format; thereby, allowing a transparent comparison of the travel solutions from the plurality of travel providers.

The sources of travel solutions potentially include any external travel planning systems provided by any ground or air travel providers. They include as well third party travel providers such as global distributions systems (GDS's) and GDS new entrants (GNE's). A source plug-in is provided for interfacing with each external travel planning system used as a source of travel solutions.

The invention also concerns a computer program product stored on a computer readable storage medium, comprising computer readable code means for causing at least one computer to operate the above described method.

### BRIEF DESCRIPTION OF THE DRAWINGS

FIG. 1 shows two examples of the key elements that characterize travel sources.
FIG. 2 shows an example of characteristics selected to specify a basket.
FIG. 3 shows an ordered set of sources.
FIG. 4 describes a multi-travel aggregator system according to the invention.
FIG. 5 shows the steps of the method to aggregate travel results from a plurality of travel providers.
FIG. 6 shows an example of a basket rule for a domestic market targeting two baskets and an exemplary window of a response to a travel request.

### DETAILED DESCRIPTION

The following detailed description of the invention refers to the accompanying drawings. While the description includes exemplary embodiments, other embodiments are possible, and changes may be made to the embodiments described without departing from the spirit and scope of the invention.

The following terms are used throughout the following detailed description which represents constitutive elements of the invention and are defined as follows:
- A market refers to a pair of geographical criteria with an optional directional indicator, including:
   a code, such as a railway station code, an airport code and a heliport code;
   a city name or code;
   a state name or code;
   a country name or code;
   a travel zone;
   the entire world.

When applicable the codes used are those defined by IATA, i.e. the International Air Transport Association, for airports, cities, states, etc. Examples of markets are:
FR <-> FR, France to France i.e. within the country of France;
MUC-> FRA, from Munich to Frankfort, Germany (but NOT from Frankfort to Munich);

- A travel provider refers to a company providing any form of travel solution to a traveler. This includes railway companies, bus companies, helicopter companies and airlines (network, regional and low-cost airlines), or any ground transportation means such as taxis and limousine services or sea transportations means.
- A source refers to any computerized system offering travel opportunities on a given market and from which a system according to the invention can get travel solutions. The source is the travel provider itself or any third party company gathering travel solutions on behalf of various independent travel providers. Each source is market driven. Examples of travel provider systems that are sources of travel solutions are:
   SNCF, the French national railways, through a travel planning system known under the acronym of RIVAx;
   DB (Deutsche Bahn), the German railways;
   SJ, the Swedish railways;

Traditional and low cost air carriers, such as United Airlines or EasyJet. Examples of third party companies offering travel solutions, generally on a world wide basis, from various travel providers are:
the GDS's (global distribution systems), i.e., any of the few world-wide companies serving the travel industry such as AMADEUS, WORLDSPAN, GALILEO and SABRE;
the GDS new entrants or GNE's which mostly develop distribution products through the web such as FareLogix, G2Switchworks and ITA.

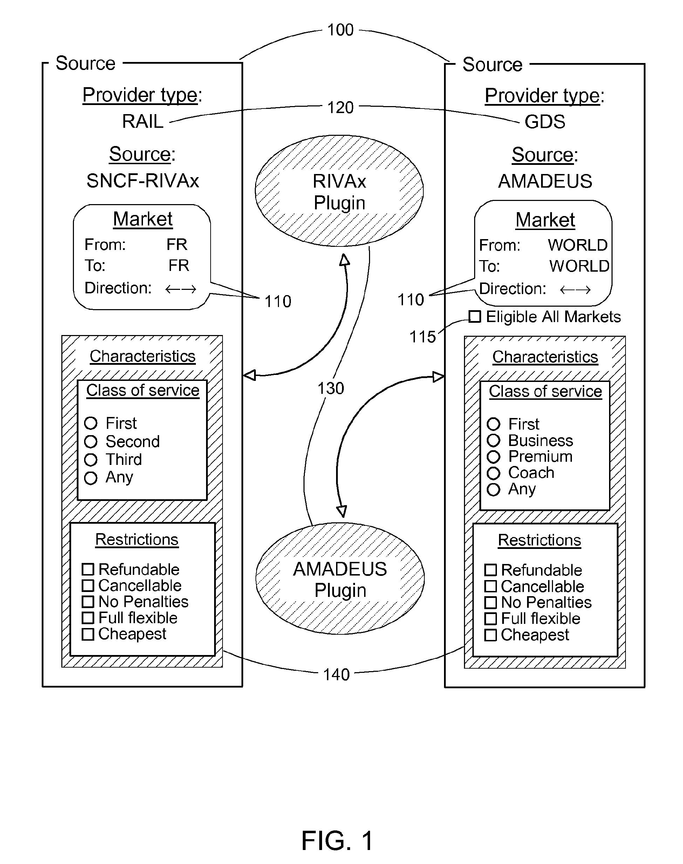

FIG. 1 shows two examples of the key elements that characterize sources (100):
- a source is defined for a market (110);
- a source has one or more provider types (120);
- there is an associated plug-in (130) which abstracts each source from its implementation specifics and details such as connectivity, protocols, etc.;
- for each source the characteristics (140) supported are identified in categories as further shown hereafter:

| category | examples | description |
|---|---|---|
| Quality of travel | Class of service | Business, premium, economy |
| | Restrictions | Refundable, cancelable, no penalties, fully flexible |
| Traveler preferences | Opt in/opt out service options: Seat selection, meal selection, baggage, etc. | Options |
| Traveler profile | Passenger type: student, resident, etc. | Source to indicate passenger types supported. Simpler sources may have restricted list. |
| | Payment cards | Prepaid travel |
| | Other payment methods | Travel/vacancy coupons |
| | Special program cards | Special discount travel |

Following element is also part of the invention. It is defined as follows:
- A basket is aimed at determining what sources are to be used upon reception of a travel request. This source determination is conducted based on market matching and provider type. Baskets also determine what characteristics are to be used to retrieve solutions from the various sources of travel providers:
   - for a given market associated to a basket all sources that have the same coverage or a subset of the basket's coverage are eligible;
   - the basket mechanism provides the means to encapsulate the business intelligence in its modeling by ensuring that not only pertinent sources are targeted and aggregated but also ensuring that sources are targeted with the relevant quality of service modeled by the basket characteristics;
   - the responsibility of the basket is to determine what characteristics of the targeted sources apply;
   - if the targeted source cannot handle the characteristics of the basket, it is not polled to retrieve travel solutions.

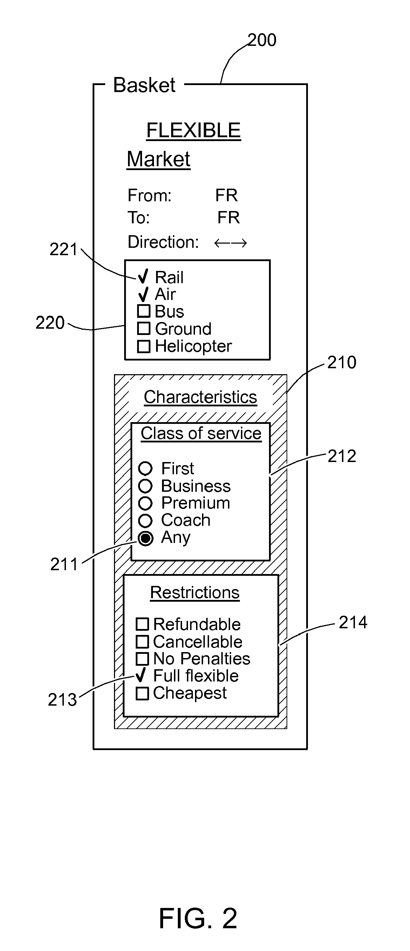

FIG. 2 shows an example of characteristics (210) selected to specify a basket (200). Selected characteristics (211, 213) optionally belong either to the class of service (212) or to the restrictions (214) or both.

A basket also uses the provider types (220) to match sources. Even if sources for a given provider type, e.g.: RAIL (221), match on market criteria, if the provider type is not eligible for the basket, it is not selected. However, sources that are flagged 'eligible all markets', as shown in FIG. 1 (115), apply anyway for the basket even if the source does not match (to avoid having to define certain generic sources such as GDS at all levels). The provider type still needs to match in any case.

The characteristics targeted by the basket must be supported by the source otherwise it is not selected. For example, if business is the only selected class of service all sources that do not support this quality of service are eliminated even though market and provider type may fit. The selected characteristics are by default cumulative, i.e., implement a logical AND condition although an alternate implementation of the basket may optionally support a logical OR in which case only one of the selected characteristics needs to be present to have source matching the basket. Also, some sources may support only a subset of the basket complete set of restrictions and still remain eligible.

The here above mechanism ensures that only relevant sources are targeted for answering to the traveler requests improving response time and performance in spite of the dispersion of the information to be gathered.

Data are optionally aggregated in the order in which responses are returned by the plug-ins. A specific ordering mechanism can be alternatively applied. Sorting options are, e.g.: departure time, price, provider, number of connections, duration, arrival time, elapse travel time, class of service or vendor.

The basket can optionally manage sources concurrently.

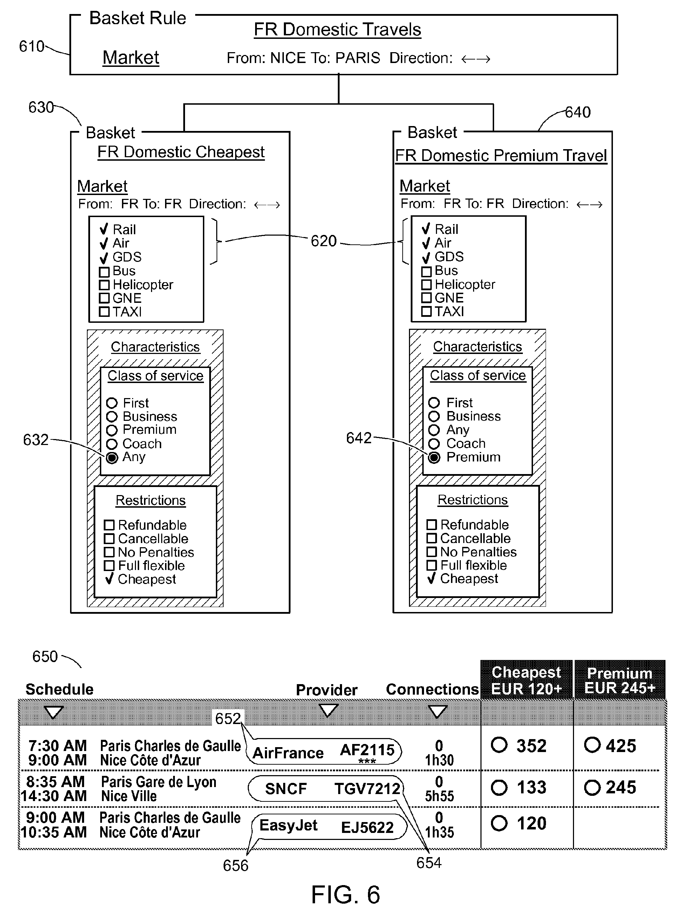

The basket rule which can be defined as follows:
- For a given itinerary a rule engine resolves to only one basket rule which is the most appropriate basket rule. The basket rule, when it was built by the administrator is linked to baskets. A basket rule targets the baskets and determines what baskets are to be displayed to the traveler. A basket rule is defined for a market and is the first thing that must match a traveler's request. It can contain one or several baskets in which case a preference is attributed to each basket simply by ordering them. They are displayed according to their attributed preferences. An example of this is shown in FIG. 6.

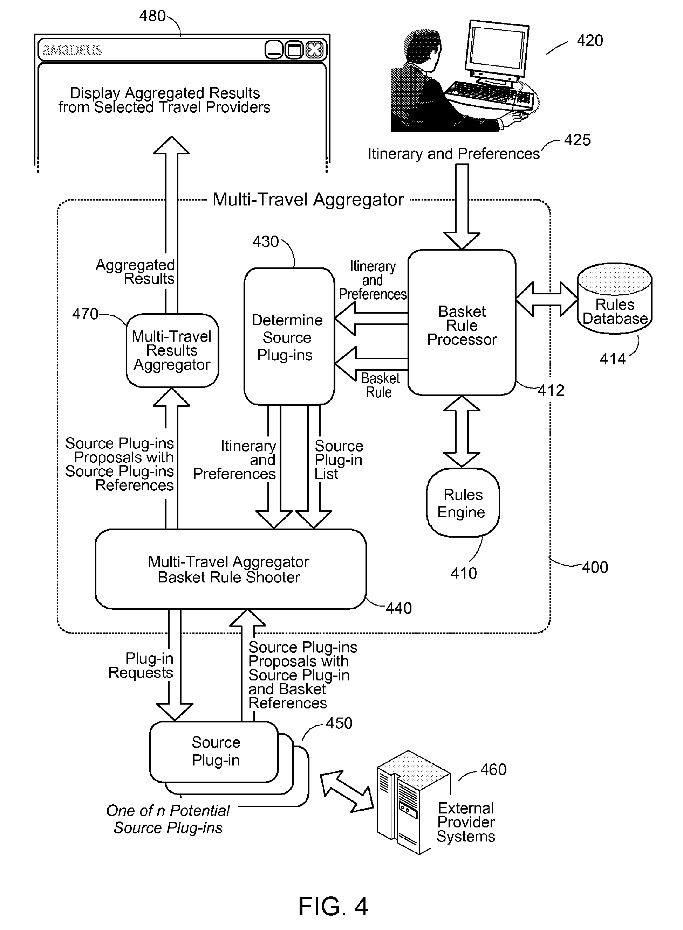

FIG. 4 describes a multi-travel aggregator system (400) according to the invention.

Building on the above definition of elements a rules engine (410) determines the most appropriate basket rule that applies for handling a traveler request (425). Traveler request includes an itinerary and, possibly, some travel preferences such as a class of service. Basket rules are held in a database (414) and processed (412) so that to determine a list of relevant source plug-ins (430) for the current traveler request. Based on the search criteria, there may be a further pruning of sources selected by targeted baskets for the eligible basket rule. Some sources may have been selected as they are a sub-set of the basket matching, but do not match, e.g., the search criteria geography.

The basket rule shooter (440) of the multi-travel aggregator targets the sources via the plug-ins (450) of the external provider systems (460) on the basis of the search criteria corresponding to the traveler request and basket characteristics applicable. Sources that do not meet the traveler search criteria and the basket characteristics are not polled.

Results from all targeted sources, and for all applicable baskets, are aggregated (470) and returned for display (480) to the traveler.

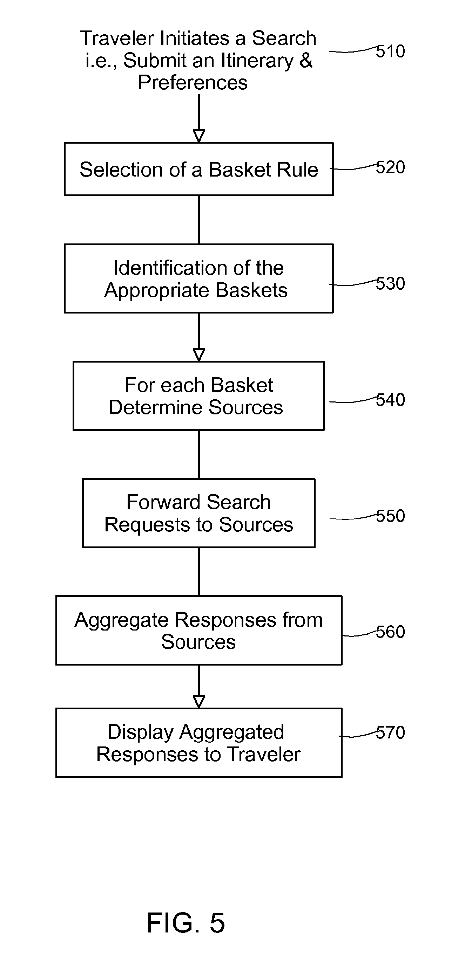

FIG. 5 shows the steps of the method to aggregate travel results from a plurality of travel providers.

Search of travel solutions is initiated by a traveler, end-user of a system according to the invention, who submits a travel request (510) including an itinerary and travel dates with preferences.

Rules engine shown in FIG. 5 first determine on the basis of the travel request contents the most appropriate basket rule to apply (520).

Then, from the selected basket rule, the travel aggregator can identify the appropriate baskets, i.e., those that are targeted by the rule (530). And, from these baskets, the sources are identified (540).

Once sources are identified the travel aggregator concurrently delegates (550) to each of the source plug-ins the retrieval of travel solutions as per the search criteria and basket characteristics. It is possible that different baskets may target the same source in which case it is up to the source plug-in to decide how the results can be retrieved per basket.

Each source plug-in knows how to connect to a system according to the invention and cleanly manages its own error handling (timeout, technical connectivity issue, etc.). Also, each source plug-in is devised to have the knowledge of targeting, on the corresponding source system, the travel solutions that fit the search criteria and basket characteristics. Then, each plug-in builds the responses obtained from its corresponding source into a generic output that can be handled by the travel aggregator.

After the travel solutions have been retrieved and built by all the appropriate source plug-ins they are aggregated by the multi-travel aggregator (560) and displayed in a common format (570) to the traveler, end-user of the system.

FIG. 6 shows an example of a basket rule (610) for a domestic market targeting two baskets.

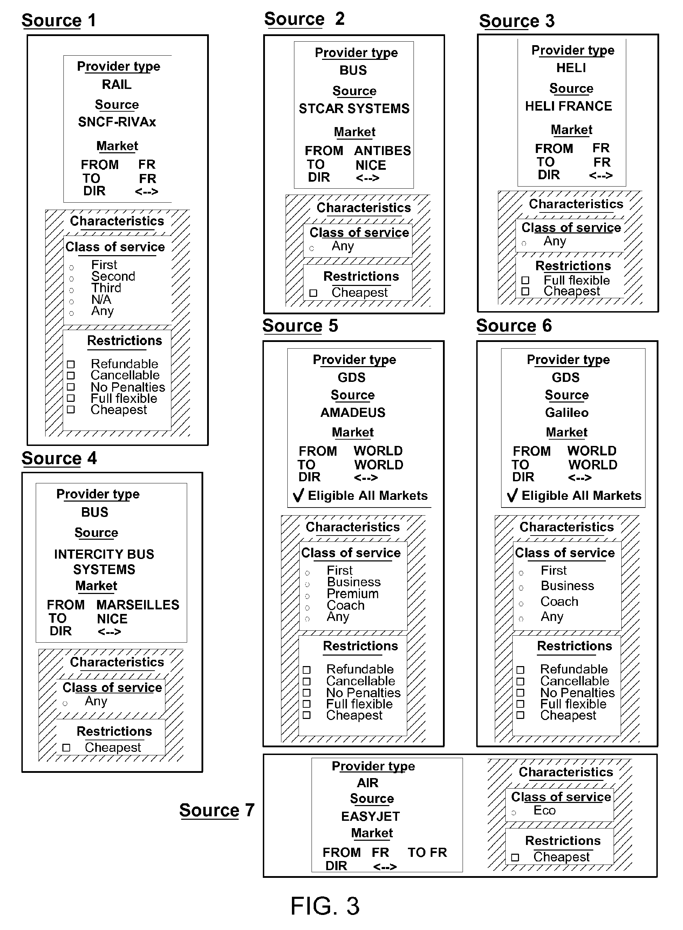

In this example both baskets reference the same provider types (620) but this does not necessarily need to be the case. The sources 1, 5, 6 and 7 shown in FIG.3 are targeted under the form of two baskets for the four identified sources. With the 'cheapest' domestic basket (630) all the four identified sources can be considered since the class of service is specified to 'any' (632) allowing to retain sources offering any sort of class of service. For the 'premium' domestic basket (640) the source 7 is not retained since this provider of low-cost travel services has a single 'economy' class as shown in FIG. 3.

Hence, an example of what is aggregated and returned to the traveler having issued the travel request is shown in window (650). In this example of a trip between PARIS and NICE, France three different types of service providers are thus aggregated. A traditional air carrier (652), a national railway company operating high-speed trains (654) and a low-cost air carrier (656). Hence, a complete set of travel solutions from multiple travel providers are offered from where the traveler can exercise an informed choice. The set of offered travel solutions does not only include low-cost solutions but also include premium solutions with fewer restrictions.

The use of baskets gathering various travel providers, provider product characteristics and sources allow an easy comparison of the offers between the different sources. It is thus possible, as illustrated in FIG. 6, to compare at a glance for example rail transportation and air travel solutions on the basis of similar characteristics of their respective offerings. For instance, these characteristics may relate to the price, the flexibility or the class of the service.

It will be possible from the shopper page proposing offers in baskets to book solutions that are partially from one provider and partially from another.

A multi-travel aggregator according to the invention is well adapted to imbed travel solutions offered by various local travel providers, e.g., operating busses in a limited geographic area, through the development of the corresponding plug-ins so that it is possible to book a complete trip merging more than one kind of travel provider and/or to provide very local travel solutions that do not deserve to include any air segment or long distance transportation means.

Irrespective of the source of data, and whichever the means used to recover data from the source, a plug-in adapts the retrieved source travel solutions to fit the needs of the multi-travel aggregator so that data are eventually presented to the traveler in a coherent and consistent way.

The use of basket rules adds a great deal of flexibility to achieve sources aggregation based on market consideration.

By allowing management and aggregation of sources and comparison of the results, the invention provides a generic solution to a domain that is dominated by local travel providers and sources.

## Claims

1. A method for aggregating travel solutions from a plurality of travel sources, **characterized in that** the method first comprising setting up:
markets (110), each made of a pair of geographic criteria with an optional directional indicator;
sources (100) of travel solutions per market;
baskets (200) of compatible sources including provider types (220) and travel product characteristics (210);
basket rules (610) for determining the baskets associated to market and product characteristics;
the method further comprising the steps of:
receiving a travel request (510) including an itinerary;
determining the basket rule (520) best fitting the travel request;
identifying the appropriate baskets (530) for the determined basket rule;
selecting, for each basket, the sources (540) that could possibly provide a travel result to the request;
forwarding to each determined source the travel requests (550);
receiving travel results from the sources;
aggregating travel results (560);
displaying aggregated travel results (570).

2. The method of claim 1 wherein the sources of travel solutions comprise any travel planning systems provided by any ground or air travel providers (460).

3. The method of claim 1 wherein the sources of travel solutions are travel planning systems of third party travel providers including global distributions systems (GDS's) and GDS new entrants (GNE's).

4. The method of claim 1 wherein a source of travel solutions is eligible on all markets (115).

5. The method of claims 2 or 3 wherein a source plug-in (450) is provided for interfacing with each travel planning system used as a source of travel solutions.

6. The method of claim 1 wherein the travel provider provide at least one transportation mode amongst rail, air, ground and sea transportation modes.

7. The method of claim 1 wherein the travel product characteristics (210) include service classes (212) and/or travel restrictions (214) and/or traveler profile and/or traveler preferences.

8. The method of claim 7 wherein service classes include first, business, premium, coach and any class of service (212).

9. The method of claim 7 wherein travel restrictions include refundable, cancelable, no penalties, full flexible and cheapest fares (214).

10. The method of claim 1 wherein the market pair of geographic criteria include city codes, state codes, country codes, travel zones and the whole world.

11. A multi-travel aggregating system (400), comprising means adapted for carrying out each step of the method according to any one of the claims 1 to 10.

12. A computer program product stored on a computer readable storage medium, comprising computer readable code means for causing at least one computer to operate the method of aggregating travel solutions according to any one of the claims 1 to 10.
